# EUROPEAN PATENT SPECIFICATION

(11) **EP 2 233 376 B1**
(45) Date of publication and mention of the grant of the patent: **01.02.2012**
(21) Application number: 07817366.3
(22) Date of filing: 11.12.2007
(51) Int. Cl.: B60S 9/08, B66F 3/16, B66F 3/20, B60D 1/66

(54) **SUPPORTING DEVICE**
STÜTZVORRICHTUNG
DISPOSITIF DE SOUTIEN

(43) Date of publication of application: 29.09.2010
(73) Proprietor: Xiamen Austin-westran Machinery Co., Ltd, Fujian 361021 (CN)
(72) Inventor: ZHANG, Wei, Fujian 361021 (CN)
(74) Representative: Bauer, Clemens
(86) International application number: PCT/CN2007/071218
(87) International publication number: WO 2009/074001

(56) References cited:
- EP-A2- 1 350 701
- CN-A- 1 453 167
- CN-Y- 2 197 349
- DE-U1- 20 305 175
- DE-U1-202006 012 472
- JP-A- 63 145 842
- US-A- 3 148 558
- US-A- 4 187 733
- US-A- 5 238 266
- US-A1- 2004 159 827
- US-A1- 2006 119 089

## Description

### Technical Field

The present invention relates to a supporting device applied to trailers, special purpose vehicles and in various cases where the function of support is needed. The supporting device is composed via mutual cooperation of the inner and outer tubes, wherein the inner tube is enabled to extend and retract within a certain range of length through the transmission system.

### Background of the Invention

The supporting device is mainly used in a trailer, the front end of which is provided with a pair of supporting devices (two supporting legs). Presently, there are generally two forms of supporting device used for a trailer:
1) Two supporting legs work together through an intermediate connecting rod, one supporting leg being the active supporting leg, the other one being the passive supporting leg, with the active supporting leg configuring the input mechanism and the transmission system;
2) Two supporting legs independently configure the input mechanism and the transmission system.

Upon coupling of the truck to the trailer, the inner tube of the supporting device is retracted to the specified position; upon loading and unloading, the inner tube of the supporting device is extended so as to make contact with ground and support the trailer, in which case the truck may be detached from the trailer; after the trailer is loaded, then the inner tube of the supporting device is extended as needed, so as to elevate the trailer and enable re-coupling thereof to the truck.

The transmission system of the supporting device used in a trailer typically possesses a top gear and a bottom gear. In case the trailer is bearing the load and stopped, ready to be detached from the truck, the operator uses the top gear so as to quickly make the inner tube of the supporting device extend from the retracted position and contact the ground. Once the supporting device makes contact with ground, the bottom gear is used to further extend the inner tube of the supporting device so as to uplift the trailer. Similarly, after the trailer is loaded, the bottom gear is used to make the inner tube of the supporting device extend and elevate the trailer as required, and, after coupling of the truck to the trailer, then the top gear is used to quickly retract the inner tube of the supporting device to the specified position.

The existing supporting devices used in the trailer make use of a plurality of pairs of involute spur cylindrical gear external gearing, a bevel gear pair and a pair of nut and screw rod mechanism to compose the transmission system, and the top gear and the bottom gear are realized through the change of the gearing pairs of the involute spur cylindrical gear. Since the transmission ratio of the external gearing transmission of the involute spur cylindrical gear is low, the transmission ratio of the bottom gear of the existing supporting devices is relatively low due to structural restriction, and upon operation at the bottom gear under heavy load, a relatively large input torque is required. Meanwhile, due to the structural influence of the bottom gear transmission ratio as needed, the top gear input and output transmission ratio is greater than 1, so, upon operation under no load and at the top gear, a relatively long time period is needed to fulfill the task.

Document EP-A-1 350 701 discloses a support device according to the preamble of claim 1.

### Summary of the Invention

The present invention aims at providing a supporting device with a small size large transmission ratio. The device may utilize an the electric motor (or pneumatic motor) driving transmission mechanism.

The present invention provides a supporting device, comprising an upper tube, an inner tube member, a transmission system, and a foot member. The transmission system is mounted on the upper portion of the upper tube. The inner tube member is jacketed inside the upper tube. The upper portion of the inner tube member is connected to the transmission system and the lower portion thereof is connected to the foot member. The transmission system comprises at least one set of small teeth difference transmission system, a bevel gear pair and a screw rod. The small teeth difference transmission system is connected to the bevel gear, which in turn is connected to the screw.

The small teeth difference transmission system comprises a shell, an input shaft, a fixed plate, a sliding block, a planetary wheel, a bearing, a cam, a center wheel, an output bushing, a gearshift sliding key, a bracket and an output shaft. The center wheel comprises a ring-shaped body, including an internal gear ring. The fixed plate is fixedly connected to one inner wall of the shell, and is fixedly connected together with the bracket by the screw so as to define a mounting space, and the sliding block, planetary wheel, bearing, cam, center wheel and output bushing are all mounted within this mounting space. The cam is fixedly connected to the input shaft, and is externally jacketed by the bearing. The bearing is externally jacketed by the planetary wheel, while the external gear ring of the planetary wheel is meshed with the internal gear ring of the center wheel. The inner end face of the center wheel is fixedly connected with the output bushing, while the output bushing is slidingly connected onto the bearing seat of the bracket through the bearing. The input shaft is coaxially arranged in relation to the output shaft, and the gearshift sliding key is movably jacketed within the inner end hole of the output shaft. The input shaft is a stepped shaft, which penetrates into the shell and is axially reciprocally movable, on the big shaft part of its penetrating portion is sequentially movably jacketed with the fixed plate, the sliding block, the cam and the center wheel. The small shaft part of the penetrating portion of the input shaft is movably penetratingly disposed on the gearshift sliding key and is able to motivate the gearshift sliding key by the clip provided on the end thereof so that the gearshift sliding key reciprocally moves inside the inner end hole of the output shaft to establish two modes of operation, that is, the engagement/disengagement of the gearshift sliding key to/from the output shaft.

Both end faces of the sliding block respectively include mutually perpendicular projections., On the end faces of the fixed plate and the planetary wheel are provided rectangular sliding chutes, and the projections on both end faces of the sliding block respectively are slidingly connected to the rectangular sliding chutes on the end faces of the fixed plate and the planetary wheel.

The small teeth difference transmission system comprises a shell, an input shaft, an eccentric wheel, a bearing, a planetary wheel, a center wheel, a cylindrical pin, a rolling sleeve, a fixed disc and an output shaft. The center wheel is a stepped cylindrical body. The inner hole of the small cylindrical body constitutes the shaft hole, the inner chamber of the big cylindrical body constitutes the internal gear ring, and the inner hole of the small cylindrical body is fixedly jacketed onto the inner end of the output shaft. The outer end of the output shaft is fixedly connected onto the driving bevel gear of the bevel gear pair, while the driven bevel gear of the bevel gear pair is fixedly connected onto the screw rod. The input shaft penetrates into said shell and is axially reciprocally movable. The penetrating portion of which is sequentially movably jacketed with the fixed disc, the eccentric wheel and the center wheel. The input shaft and the output shaft are coaxially arranged. The fixed disc is fixedly connected to one inner wall of the shell, the bracket abuts against another inner wall of the shell, and the fixed disc and the bracket are fixedly connected together by the screw. The eccentric wheel is fixedly connected onto the input shaft, the eccentric wheel is externally jacketed with the bearing, and the bearing is externally jacketed with the planetary wheel. on the plane of the planetary wheel are provided a plurality of shaft holes, and the cylindrical pins are respectively insertedly connected into the plurality of shaft holes. The pinholes, corresponding to the number and positions of the shaft holes of the planetary wheel, are provided on the fixed disc. The rolling sleeve is jacketed within the pinhole, and the cylindrical pin insertedly connected into the planetary wheel is movably insertedly disposed within the rolling sleeve. The external gear ring of said planetary wheel is meshed with the internal gear ring of said center wheel. The shell is the upper portion inner chamber of the upper tube.

The present invention further comprises a base plate, the peripheral of which is fixedly connected to the upper portion inner chamber of the upper tube. The upper end of said screw rod penetrates through the hole inside the base plate to be fixedly connected to the driven conical teeth of the bevel gear. Between the lower end face of the base plate and the stepped surface of the upper portion of the screw rod, there is provided a thrust bearing, so as to facilitate the rotation of the screw rod against the thrust bearing.

The present invention further comprises an externally disposed gear box that includes a speed reduction gear box body, a small teeth difference transmission system, an electrical shift device, and a top and bottom gearshift device. The small teeth difference transmission system is comprised of a duplicate center wheel, a planetary wheel, a fixed disc, a bearing, an eccentric wheel, an electrical input shaft, a cylindrical pin, and a rolling sleeve. The electrical shift device comprises a gearshift shaft, a spring pin, and a change gear. The top and bottom gearshift device comprises an input shaft, and an input shaft gear. The input shaft, gearshift shaft, and electrical input shaft are respectively movably insertedly disposed inside the upper, middle and lower portions of the speed reduction gear box body. The duplicate center wheel is a stepped cylindrical body, and the inner hole of the small cylindrical body part constitutes the shaft hole, the outer cylindrical surface thereof being provided with an external gear ring, while the inner chamber of the big cylindrical body part constitutes an internal gear ring and the inner hole of the small cylindrical body part is movably jacketed onto the electrical input shaft through the bearing. The electrical input shaft is rotatably insertedly disposed in the bearing that is internally provided within the reduction gear box body. The eccentric wheel is fixedly connected onto the electrical input shaft, the eccentric wheel is externally jacketed within the bearing, and the bearing is externally jacketed within the planetary wheel. The cylindrical pin that is insertedly connected onto the planetary wheel is movably penetratingly disposed in the rolling sleeve of the fixed disc. The external gear ring of the planetary wheel is meshed with the internal gear ring of the duplicate center wheel, the external gear ring of the duplicate center wheel is meshed with the change gear that is fixedly connected onto the gearshift shaft, and the change gear is meshed with the input shaft gear that is fixedly connected onto the input shaft.

The small teeth difference transmission system comprises an input shaft with an eccentric wheel, a primary planetary wheel, a floating disc with an eccentric wheel, a secondary planetary wheel, a bearing, a center wheel, a cylindrical pin, a rolling sleeve and an output bushing. The center wheel is fixed within the shell, the inner chamber thereof including two internal gear rings that are mutually parallelly arranged. On the input shaft with an eccentric wheel are sequentially jacketed with the primary planetary wheel, the floating disc with an eccentric wheel and the secondary planetary wheel. The primary planetary wheel is jacketed onto the bearing, and the bearing is jacketed onto that segment of the input shaft with an eccentric wheel. The cylindrical pin that is insertedly connected onto the primary planetary wheel is movably penetratingly disposed in the rolling sleeve of said floating disc with an eccentric wheel. The external gear ring of the primary planetary wheel is meshed with the first row of internal gear ring of the center wheel. The secondary planetary wheel is jacketed onto said input shaft with an eccentric wheel through the bearing. The cylindrical pin that is insertedly connected onto the secondary planetary wheel is movably penetratingly disposed in the rolling sleeve of said output bushing, and the external gear ring of the secondary planetary wheel is meshed with the second row of internal gear ring of the center wheel. The inner end of the output shaft is fixedly connected onto the output bushing, and the outer end of the output shaft is fixedly connected onto the driving bevel gear of the bevel gear pair. The input shaft with an eccentric wheel and the output shaft are coaxially arranged.

By adopting the above solution, in the present invention, the application of the small teeth difference transmission system in the bearing device gives the following advantages:
1. The adoption of the small teeth difference transmission device allows the transmission system of the bearing device to achieve a relatively large transmission ratio, enable the bearing device in an idle state to more quickly extend and retract the inner tube thereof, and save the running time required. In case the bearing device is heavily loaded, the inner tube is relatively slow in extension, and the manual operation is relatively labour-saving, thus the bearing device of the present invention is suitable for more people.
2. The adoption of the small teeth difference transmission device may render the transmission system of the bearing device to be used in conjunction with the high-speed electric motor or pneumatic motor so as to achieve automatic operation.
3. The transmission system adopting the small teeth difference transmission device may be designed to be manufactured with a relatively small size and a compact structure so as to save material and cost of manufacture.
4. The input shaft of the involute small teeth difference transmission device of the present invention is axially movable, so as to bring about the sliding motion of the planetary wheel for its engagement/disengagement to/from the center wheel, hence achieve top and bottom gearshift.
5. In the present invention, the shift device in the gear box is externally provided. After the primary electrical small teeth difference deceleration of the speed reduction gear box there are provided three gears to form two sets of gearing transmission, the middle gear is mounted and fixed onto the shift shaft to pull the shift shaft move so as to put said two sets of gears in the state of engagement or disengagement. Thus, the shift requirement that the transmission shaft of the electric motor is coupled to or insolated from the manual input shaft is fulfilled.

### Brief Description of Drawings

Fig. 1 is an exploded perspective view of a first embodiment of the present invention;
Fig. 2 is a cross-sectional view of the first embodiment of the present invention;
Fig. 3 is a partially cut-away perspective view of a transmission system of the first embodiment of the present invention;
Fig. 4 is an exploded perspective view of a second embodiment of the present invention;
Fig. 5 is a cross-sectional view of a second embodiment of the present invention;
Fig. 6 is a partially cut-away perspective view of the transmission system of the second embodiment of the present invention;
Fig. 7 is a perspective exploded view of a third embodiment of the present invention;
Fig. 8 is a cross-sectional view of the third embodiment of the present invention;
Fig. 9 is a partially cut-away perspective view of the transmission system of the third embodiment of the present invention;
Fig. 10 is a cross-sectional view of the fourth embodiment of the present invention; and
Fig. 11 is an illustration of a power transmission of an external gear box of the fourth embodiment of the present invention.

### DETAILED DESCRIPTION OF THE PREFERRED EMBODIMENTS

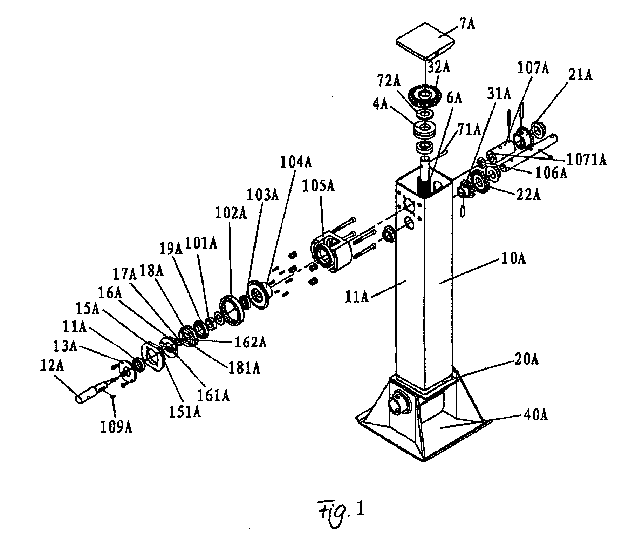

For purposes of description herein, the terms "upper," "lower," "right," "left," "tear," "front," "vertical," "horizontal," and derivatives thereof shall relate to the invention as oriented in Fig 1. However, it is to be understood that the invention may assume various alternative orientations and step sequences, except where expressly specified to the contrary. It is also to be understood that the specific devices and processes illustrated in the attached drawings, and described in the following specification are exemplary embodiments of the inventive concepts defined in the appended claims. Hence, specific dimensions and other physical characteristics relating to the embodiments disclosed herein are not to be considered as limiting, unless the claim expressly state otherwise.

As shown in Fig.1, the first embodiment of the supporting device of the present invention is shown, which is a two-speed built-in bearing device, comprising an upper tube 10A, an inner tube member 20A, a transmission system 30A and a foot member 40A.

The transmission system 30A is mounted on the upper portion of the upper tube 10A. The inner tube member 20A is movably jacketed inside the upper tube 10A and is movable up and down in relation to the upper tube 10A so as to lift up the vehicle body. The upper portion of the inner tube member 20A is connected to the transmission system 30A, and the lower portion thereof is connected to the foot member 40A.

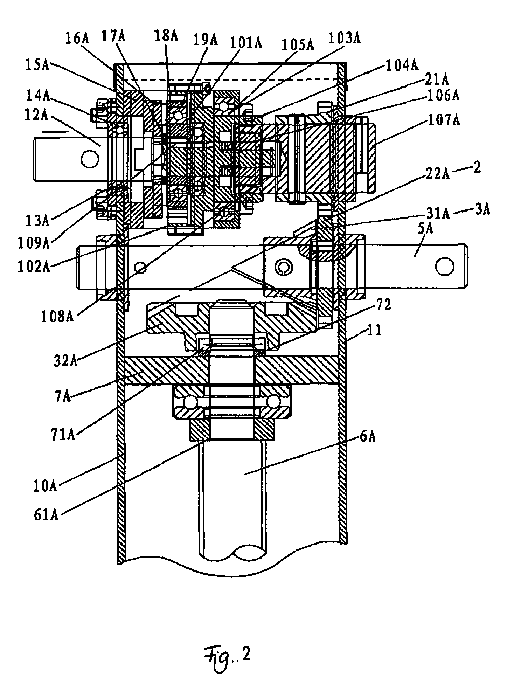

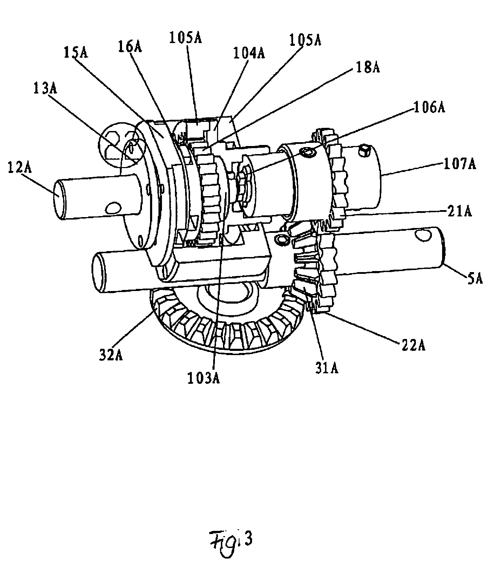

As shown in Figs. 1-3, the transmission system 30A is mainly comprised of one set of small teeth difference transmission system 1A, a cylindrical gear pair 2A , a bevel gear pair 3A, a thrust bearing 4A, a gear shaft 5A, a screw rod 6A, and a base plate 7A.

The driving cylindrical gear 21A of the cylindrical gear pair 2A is jacketed onto the output shaft 107A of the small teeth difference transmission system 1A. The driven cylindrical gear 22A is meshed with the driving conical teeth 31 A of the bevel gear pair 3A. The base plate 7A is peripherally fixedly connected to the upper portion inner chamber of the upper tube 10A. The upper end of said screw rod 6A penetrates through the hole in the base plate 7A, being fixedly connected within the hole in the driven conical teeth 32A of the bevel gear pair 3A through the slot pin 71A. A quenched gasket 72A is provided between the driven conical teeth 32A and the base plate 7A. A thrust bearing 8A is provided between the lower end face of the base plate 7A and the stepped surface 61 A at the upper portion of the screw rod 6A, so as to facilitate the rotation of the screw rod 6A against the thrust bearing 8A.

The small teeth difference transmission system 1A is mainly comprised of a shell 11A, an input shaft 12A, a bearing seat 13A, a bearing 14A, a fixed plate 15A, a sliding block 16A, a stop washer 17A, a planetary wheel 18A, a bearing 19A, a cam 101A, a center wheel 102A, a bearing 103A, an output bushing 104A, a bracket 105A, a gearshift sliding key 106A, and an output shaft 107A. The center wheel 102A is a ring-shaped body, including an internal gear ring.The fixed plate 15A is fixedly connected to one inner wall of the shell 11A, and is fixedly connected together with the bracket 105A by a screw to so as to define a mounting space. The sliding block 16A, planetary wheel 18A, bearing 14A, cam 101A, center wheel 102A and output bushing 104A are all mounted within the mounting space. The cam 101A is fixedly connected onto the input shaft 12A, the cam 101A is externally jacketed by the bearing 19A, and the bearing 19A is externally jacketed by the planetary wheel 18A, while the external gear ring of the planetary wheel 18A is meshed with the internal gear ring of the center wheel 102A. The inner end face of the center wheel 102A is fixedly connected with the output bushing 104A, while the output bushing 104A is slidingly connected onto the bearing seat of the bracket 105A through the bearing 103A. The input shaft 12A is coaxially arranged in relation to the output shaft 107A, and the gearshift sliding key 106A is movably jacketed within the inner end hole 1071A of the output shaft 107A. The input shaft 12A is a stepped shaft, which penetrates into the shell 11 A and is axially reciprocally movable. The fixed plate 15A, the sliding block 16A, the cam 101A and the center wheel 102A are sequentially movably jacketed on a big shaft portion of the penetrating portion fo the input shaft 12A. The small shaft part of the penetrating portion of the input shaft 12A is movably penetratingly disposed on the gearshift sliding key 106A and is able to motivate the gearshift sliding key 106A by the clip 108A (elastic retaining ring) provided on the end thereof so that the gearshift sliding key 106A reciprocally moves inside the inner end hole 1071A of the output shaft 107A to establish two modes of operation, that is, the engagement/disengagement of the gearshift sliding key 106A to/from the output shaft 107A, for performing gear shift between the top gear and the bottom gear.

Both end faces of the sliding block 16A respectively include mutually perpendicular projections 161 A, 162A. On the end faces of the fixed plate 15A and the planetary wheel 18A are provided rectangular sliding chutes 151A, 181A. The projections 161A, 162A on both end faces of the sliding block respectively are slidingly connected to the rectangular sliding chutes 151 A, 181 A on the end faces of the fixed plate 15A and the planetary wheel 18A.

The operating principle of the present invention is as follows:

### 1. Bottom gear transmission

The rotation motion is manually transmitted to the input shaft 12A through the cranking bar. The cam 101A is caused to rotate via a flat key 109A, then the planetary wheel 18A mounted on the outer ring of the bearing 19A is caused to rotate via the bearing 19A. The external gear ring of the planetary wheel 18A is meshed with the internal gear ring of the center wheel 102A, thus, upon rotation of the planetary wheel 18A, since the sliding block 16A is only capable of reciprocally translating, and there is a difference between the number of teeth of the external gear ring of the planetary wheel 18A and that of the internal gear ring of the center wheel 102A (1-4 teeth), the rotation motion of the planetary wheel 18A urges the center wheel 102A to slowly rotate in the same direction. The rotation motion of the center wheel 102A is outputted through the output bushing 104A, gearshift sliding key 106A, output shaft 107A, cylindrical gear pair 2A, bevel gear pair 3A and the like, so as to achieve the bottom gear transmission of the bearing device.

### 2. Top gear transmission

With the top gear, the input shaft 12A is pushed into the upper tube 10 a certain stroke, and the right end of the input shaft 12A pushes and displaces the gearshift sliding key 106A rightwards. Thus, the gearshift sliding key 106A is out of meshing with the output bushing 104A, while the input shaft 12A is meshed with the gearshift sliding key 106A and the output shaft 107A, so as to achieve the rotation in the same direction and at the same speed between the input shaft 12A and the output shaft 107A. The planetary wheel 18A, the center wheel 1 02A and the like do not participate in the transmission.

### 3. Gearshift operation

Upon the switch from the top gear to the bottom gear, the input shaft 12A is caused to move to the left, and the right end elastic retaining ring 108A of the input shaft 12A pulls and displaces the gearshift sliding key 106A leftwards, to bring the output bushing 104A, the gearshift sliding key 106A and the output shaft 107A into a state of meshing. At the same time, both keyslots of the input shaft 12A become out of meshing with the left end projection of the gearshift sliding key 106A, so as to achieve the state of bottom gear transmission.

Upon the switch from the bottom gear to the top gear, the input shaft 12A is inversely advanced, the right end shaft shoulder of the input shaft 12A pushes and displaces the gearshift sliding key 106A rightwards, causing the output bushing 104A, and the gearshift sliding key 106A break away from the state of meshing, while both keyslots of the input shaft 12A become meshed with the left end projection of the gearshift sliding key 106A, so as to achieve the state of top gear transmission.

Advantages of the two-speed built-in bearing device of the present embodiment:
1. The transmission system of the supporting device is designed by applying the involute small teeth difference technique.
2. The small teeth difference mechanism is mounted inside the framework composed of the bracket 105A and the fixed plate 15A, thus the rigidity as a whole is excellent and the assembly is convenient. This structure may be designed to be mounted either inside the upper tube 10A or on the exterior of the upper tube 10A so as to satisfy different requirements with respect to the application of transmission.
3. By adopting a framework design, the rigidity of the whole structure is excellent, and general assembly may be carried out after partial assemblies which are mutually independent. The stand-alone cylindrical structure may be designed to be mounted either inside the upper tube 10A or on the exterior of the upper tube 10A so as to satisfy different requirements with respect to the application of transmission.
4. The present embodiment achieves excellent rigidity and is not easily fractured by adopting the structure of the sliding block 16A.
5. The present embodiment achieves gear shift through the cooperation between the gearshift sliding key 106A and the output shaft 107A, which is readily achieved.

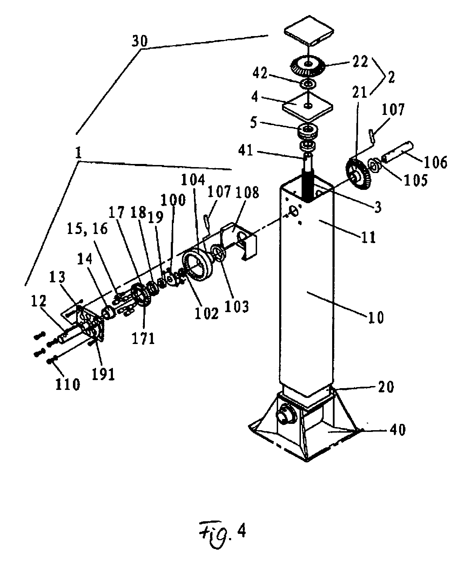

As shown in Fig. 4, the second embodiment of the supporting device of the present invention is shown, which is a two-speed built-in bearing device, comprising an upper tube 10, an inner tube member 20, a transmission system 30 and a foot member 40.

The transmission system 30 is mounted on the upper portion of the upper tube 10. The inner tube member 20 is movably jacketed inside the upper tube 10 and is movable up and down in relation to the upper tube 10 so as to lift up the vehicle body. The upper portion of the inner tube member 20 is connected to the transmission system 30 and the lower portion thereof is connected to the foot member 40.

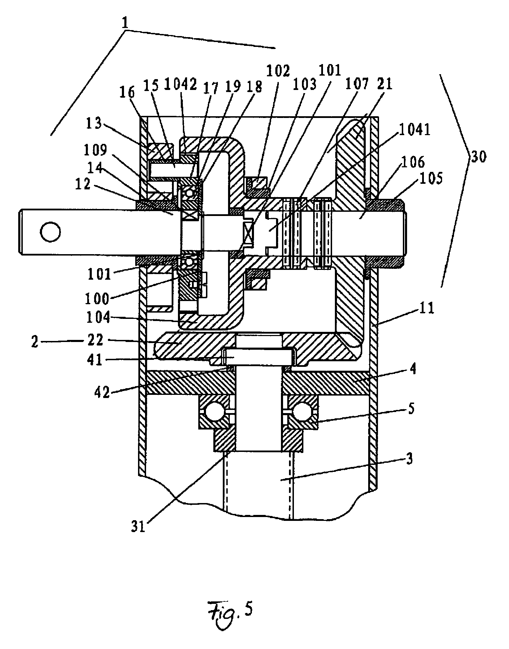

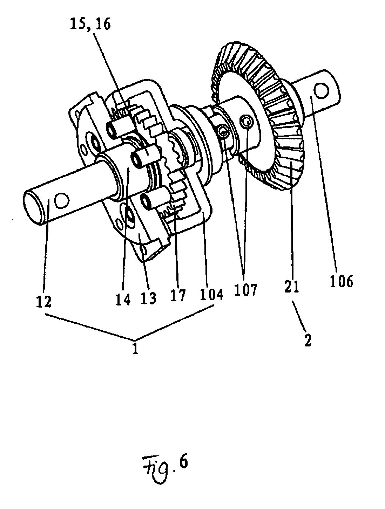

As shown in Figs. 5 and 6, the transmission system 30 is mainly comprised of one set of small teeth difference transmission system 1, a bevel gear pair 2, a screw rod 3, a base plate 4, and a thrust bearing 5.

The base plate 4 is peripherally fixedly connected to the upper portion inner chamber of the upper tube 10. The upper end of said screw rod 3 penetrates through the hole in the base plate 4, being fixedly connected within the hole in the driven conical teeth 22 of the bevel gear pair 2 through the slot pin 41, and a quenched gasket 42 is provided between the driven conical teeth 22 and the base plate 4. A thrust bearing 5 is provided between the lower end face of the base plate 4 and the stepped surface 31 at the upper portion of the screw rod 3, so as to facilitate the rotation of the screw rod 3 against the thrust bearing 5 .

The small teeth difference transmission system 1 is mainly comprised of a shell 11, an input shaft 12, a fixed disc 13, a bushing 14, a cylindrical pin 15, a rolling sleeve 16, a planetary wheel 17, a bearing 18, an eccentric wheel 19, a gasket 100, a bushing 101, an elastic retaining ring 102, a bushing 103, a center wheel 104, a bushing 105, an output shaft 106, a spring pin 107 and a bracket 108.

In the present embodiment, the shell 11 is the upper portion inner chamber of the upper tube 10. Of course, the shell may be connected to the upper tube 10 as an independent member.

The center wheel 104 is a stepped cylindrical body, the inner hole 1041 of the small cylindrical body constitutes the shaft hole, and the inner chamber of the big cylindrical body constitutes the internal gear ring 1042. The inner hole 1041 of the small cylindrical body is fixedly jacketed onto the inner end of the output shaft 106, and the outer end of the output shaft 106 is fixedly connected onto the driving bevel gear 21 of the bevel gear pair 2, while the driven bevel gear 22 of the bevel gear pair 2 is fixedly connected onto the screw rod 3.

The input shaft 12 penetrates into said shell 11 and is axially reciprocally movable so as to achieve top and bottom gear shift. The input shaft 12 and the output shaft 106 are coaxially arranged, and the penetrating portion of the input shaft 12 is sequentially movably jacketed with the fixed disc 13, the eccentric wheel 19 and the center wheel 104. The fixed disc 13 is fixed to one inner wall of the shell 11 by the screw 110, the bracket 108 abuts against another inner wall of the shell 11, and the fixed disc 13 and the bracket 108 are fixedly connected together by the screw. the eccentric wheel 19 is fixedly connected onto the input shaft through a flat key 109, and is externally jacketed with the bearing 18. the bearing 18 is externally jacketed with the planetary wheel 17. On the plane of the planetary wheel 17 are provided a plurality of shaft holes 171, and the cylindrical pins 15 are respectively insertedly connected into said plurality of shaft holes 171. The pinholes 191, corresponding to the number and positions of the shaft holes 171 of the planetary wheel 17 are provided on the fixed disc 19, and the rolling sleeve 16 is jacketed within the pinhole 191. The cylindrical pin 15 is insertedly connected into the planetary wheel 17 which is movably insertedly disposed within the rolling sleeve 16. The external gear ring of the planetary wheel 17 is meshed with the internal gear ring 1042 of the center wheel 104.

The operating principle of the present embodiment is as follows:

### 1. Bottom gear transmission

The rotation motion is manually transmitted to the input shaft 12 through the cranking bar. The cam 19 is caused to rotate via the flat key 109, then the planetary wheel 17 mounted on the outer ring of the bearing is caused to rotate via the bearing 18. On the planetary wheel 17 there is provided a cylindrical pin 15 and a rolling sleeve 16.The rolling sleeve 16 is fitted within the corresponding hole of the fixed disc 13, and the external gear ring of the planetary wheel 17 is meshed with the internal gear ring of the center wheel 104. Thus, upon rotation of the planetary wheel 17, since the cylindrical pin 15 in the fixed disc 13 can not rotate about the center of the input shaft 12, but is only capable of reciprocally translating, and there is a difference between the number of teeth of the external gear ring of the planetary wheel 17 and that of the internal gear ring of the center wheel 104 (1-4 teeth), the rotation motion of the planetary wheel 17 urges the center wheel 104 to slowly rotate in the same direction. The rotation motion of the center wheel 104 is outputted through the spring pin 107, the output shaft 106, the driving bevel gear 21 and the transmission mechanism at the rear portion, so as to achieve the bottom gear transmission of the bearing device.

### 2. Top gear transmission

When the top gear is to be adopted, the input shaft 12 is pushed into the upper tube 10 a certain stroke. Due to the structure of the input shaft 12, the input shaft 12 actuates the flat key 109, the eccentric wheel 19, the bearing 18, the planetary wheel 17, the cylindrical pin 15, the rolling sleeve 16, the gasket 100, and the elastic retaining ring 102 to simultaneously move toward the center of the upper tube 10, so as to urge the external gear ring of the planetary wheel 17 out of the state of meshing with the internal gear ring of the center wheel 104. As the input shaft 12 is moving toward the inside of the upper shaft 106, the flat formation at the right end thereof is inserted into the groove on the left end of the output shaft 106. Thus, the rotation motion of the input shaft 12 is directly transmitted to the output shaft 106. The rotation of the output shaft 106 is in turn transmitted to the center wheel 104 through the spring pin 107, the latter only idling. The rotation motion of the output shaft 106 is transmitted to the driving bevel gear 21 and the rear transmission mechanism through the spring pin 107 so as to achieve the top gear transmission of the bearing device.

### 3. Gearshift operation

When it is needed to switch from the bottom gear to the top gear, the input shaft 12 is advanced toward the upper tube 10, and the projection of the input shaft 12 pushes the bearing 18, the planetary wheel 17, the gasket 100, the elastic retaining ring 102m the cylindrical pin 15 and the rolling sleeve 16 to simultaneously move toward the center of the tube. After moving a certain stroke, the planetary wheel 17 and the center wheel 104 break away from the state of meshing, meanwhile, the flat formation at the right end of the input shaft 12 is inserted into the groove on the left end of the output shaft 106, the input shaft 12 directly causes the output shaft 106 to rotate so as to achieve the high speed transmission.

Upon the switch from the top gear to the bottom gear, the input shaft 12 is simply inversely pulled out, and the elastic retaining ring 102 of the input shaft 12 pulls the gasket 100, the bearing 18, the planetary wheel 17, the flat key 109, the eccentric wheel 19, the cylindrical pin 15 and the rolling sleeve 16 to simultaneously move toward the left wall of the tube. After moving a certain stroke and rotating a certain angle, the planetary wheel 17 and the center wheel 104 enter into the state of meshing. Meanwhile, the flat formation at the right end of the input shaft 12 is detached from the groove on the left end of the output shaft so as to achieve the low speed transmission.

Advantages of the two-speed built-in bearing device of the present embodiment:
1. The transmission system of the supporting device is designed by applying the involute small teeth difference technique.
2. The small teeth difference mechanism is mounted inside the framework composed of the bracket 108 and the fixed disc 103, thus the rigidity as a whole is excellent and the assembly is convenient. This structure may be designed to be mounted either inside the upper tube 10 or on the exterior of the upper tube 10 so as to satisfy different requirements with respect to the application of transmission.
3. One end of the output shaft 106 bears against the wall of the upper tube 10, while the other end bears against the small teeth difference center wheel, the center wheel 104 in turn is borne on the bracket 104 through the bushing 103, thus the bearing rigidity is excellent. The left end of the input shaft 12 bears against the bushing 14 of the frame, and the right end bears against the bushing 101 of the center wheel 104, which is helpful to ensure the requirement of the coaxial assembly of the input shaft 12 and the output shaft 106.
4. The eccentric wheel 19 is connected to the input shaft 12 by adopting the flat key 109, so as to facilitate the assembly and provide a compact structure.
5. By adopting a framework design, the rigidity of the whole structure is excellent, and general assembly may be carried out after partial assemblies which are mutually independent. The stand-alone cylindrical structure may be designed to be mounted either inside the upper tube 10 or on the exterior of the upper tube 10 so as to satisfy different requirements with respect to the application of transmission.
6. The planetary wheel is borne by the rolling bearing, thus the coefficient of friction is low, and the efficiency of transmission is high. The present device is operated manually, low in rotating speed, and the input shaft 12, the output shaft 16 are borne by the bushing, thus the structure is simple and the cost is low.

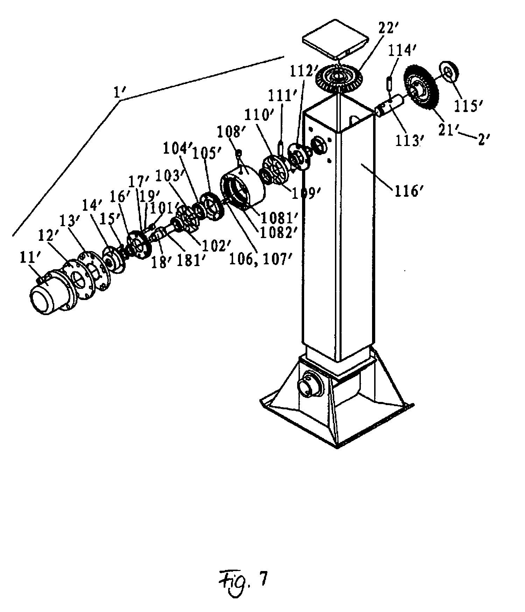

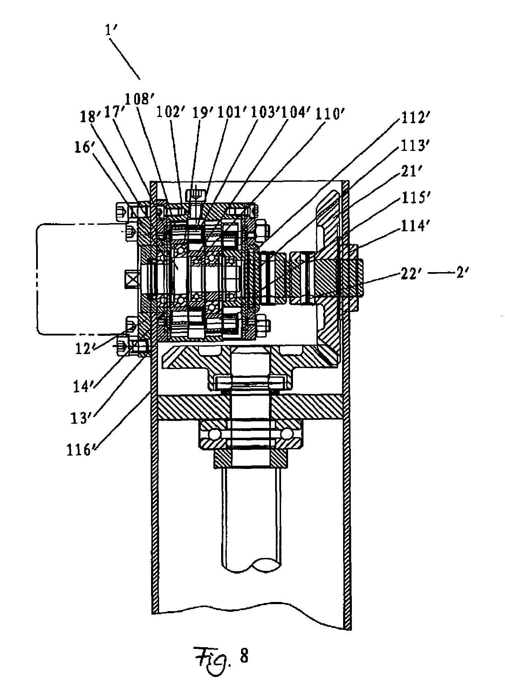

As shown in Figs. 7 and 8, the third embodiment of the supporting device of the present invention is shown, which is an electrical two-stage bearing device, the basic structure thereof being substantially the same as those of the first and the second embodiment, with the exception that the small teeth difference transmission system adopted in this embodiment is different, which is a two-stage small teeth difference transmission system.

The two-stage small teeth difference transmission system 1' is mainly comprised of an DC electric motor 11', an electric motor connecting plate 12', a left capping plate 13', a bearing seat 14', a sealing ring 15', a bearing 16', a primary planetary wheel 17', an input shaft 18' with an eccentric wheel, a cylindrical pin 19', a rolling sleeve 101', a bearing 102', a floating disc 103' with an eccentric wheel, a bearing 104', a secondary planetary wheel 105', a rolling sleeve 106', a cylindrical pin 107', a center wheel 108', a bearing 109', an output bushing 110', a spring pin 111', a middle bushing 112', an output shaft 113', a spring pin 114', a right bushing 115', and a shell 116'.

The DC electric motor 11' is fixedly connected to the outer wall of the shell 116'. The output shaft of the electric motor is connected with the input shaft 18' with an eccentric wheel, so as to cause the input shaft 18' with an eccentric wheel to rotate. Between the DC electric motor 11' and the outer wall of the shell 116' are provided the electric motor connecting plate 12' and the left capping plate 13'. The bearing seat 14' is fixed onto the inner wall of the shell 116', and in the central portions of the electric motor connecting plate 12', the left capping plate 13', the bearing seat 14' are provided the center holes for the input shaft 18' with an eccentric wheel to pass therethrough.

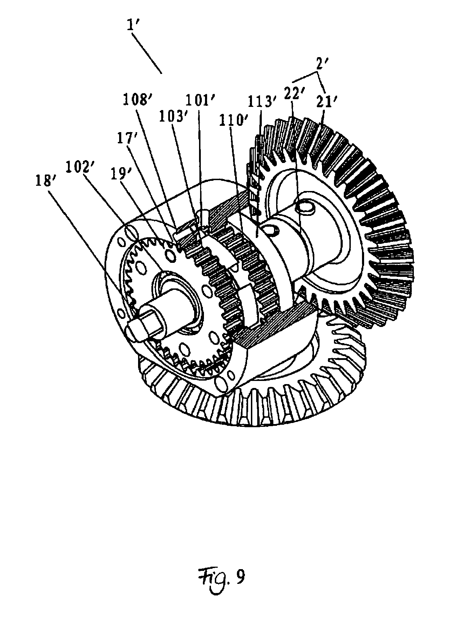

The center wheel 108' is fixed within the shell 116', and the inner chamber thereof includes two internal gear rings 1081', 1082' that are mutually parallelly arranged. Onsaid input shaft 18' with an eccentric wheel are sequentially jacketed with the primary planetary wheel 17', the floating disc 103' with an eccentric wheel and the secondary planetary wheel 105'. The primary planetary wheel 17' is jacketed onto the bearing 102', and the bearing 102' is jacketed onto that segment of the input shaft 18' with an eccentric wheel 181'. The cylindrical pin 19' that is insertedly connected onto the primary planetary wheel 17' is movably penetratingly disposed in the rolling sleeve 101' of the floating disc 103' with an eccentric wheel. The external gear ring of the primary planetary wheel 17' is meshed with the first row of internal gear ring 1081' of the center wheel (as shown in Fig.9). The secondary planetary wheel 105' is jacketed onto the input shaft 18' with an eccentric wheel through the bearing 104'. The cylindrical pin 107' that is insertedly connected onto the secondary planetary wheel 105' is movably penetratingly disposed in the rolling sleeve 106' of said output bushing 110'. The external gear ring of the secondary planetary wheel 105' is meshed with the second row of internal gear ring 1082' of the center wheel 108'. The inner end of the output shaft 113' is fixedly connected onto the output bushing 110' through the spring pin 111', and the outer end of the output shaft 113' is fixedly connected onto the driving bevel gear 21' of the bevel gear pair 2'. The input shaft 18' with an eccentric wheel and the output shaft 113' are coaxially arranged.

The operating principle of the present embodiment is as follows:

The rotation motion of the power equipment (electric motor or pneumatic motor) causes the input shaft 18' with an eccentric wheel to rotate. The input shaft 18' is provided with an eccentric wheel 181' thereon, which is mounted with a bearing 102' thereon. The outer ring of the bearing 102' is mounted with the primary planetary wheel 17', and the external gear ring of the primary planetary wheel 17' is meshed with the internal gear ring of the fixed center wheel 108'. Due to the difference in number of teeth (1-4 teeth) between the external gear ring of the primary planetary wheel 17' and the internal gear ring of the center wheel 108', the rotation motion of the input shaft 18' with an eccentric wheel under the collective action of the eccentric wheel and the fixed center wheel 108' is performing a planetary motion. The rotation of the secondary planetary wheel 105' in turn is transmitted to the floating disc 103' with an eccentric wheel through the cylindrical pin 107' and the rolling sleeve 106' fixed on the secondary planetary wheel 105' so as to achieve the primary inverse deceleration transmission.

The secondary eccentric wheel formed integrally with the floating disc 103' with an eccentric wheel is mounted with a bearing 102', the outer ring of the bearing 102' is mounted with the secondary planetary wheel 105', and the external gear ring of the secondary planetary wheel 105' is meshed with the internal gear ring of the fixed center wheel 108'. Due to the difference in number of teeth (1-4 teeth) between the external gear ring of the secondary planetary wheel 105' and the internal gear ring of the center wheel 108', the rotation motion of the floating disc 103' with an eccentric wheel under the collective action of the eccentric wheel 181' and the fixed center wheel 108' is performing a planetary motion. The rotation motion is then transmitted to the output bushing 110' through the cylindrical pin 107' and the rolling sleeve 106' so as to achieve the secondary inverse deceleration transmission. The output bushing 110', is fixed by the spring pin 111', 114' with the output shaft 113', and the driving bevel gear 21, and the driving bevel gear 21 in turn transmits the rotation rearward.

The input shaft 18' with an eccentric wheel undergoes the secondary inverse deceleration, and the output shaft 113' achieves the rotation motion in the same direction and with a large reduction ratio.

Advantages of the electrical two-stage bearing device of the present embodiment:
1. The transmission system of the supporting device is designed by applying the involute small teeth difference technique.
2. The small teeth difference mechanism adopts the design of a stand-alone cylindrical structure, the rigidity of the whole structure is excellent, and general assembly may be carried out after partial assemblies which are mutually independent. The stand-alone cylindrical structure is designed with a sealing structure. The preceding high speed deceleration mechanism of the small teeth difference system and the succeeding low speed transmission mechanism may use different lubricants; the small teeth difference mechanism may use the liquid lubricating oil to reduce the power loss, while the low speed transmission mechanism may use the lubricating grease so as to simplify the sealing structure and lower the cost. The stand-alone cylindrical structure may be designed to be mounted either inside the upper tube or on the exterior of the upper tube so as to satisfy different requirements with respect to the application of transmission.
3. One end of the output shaft 113' bears against the wall of the upper tube 10, while the other end bears against the output bushing 110' of the small teeth difference cylindrical structure, thus the bearing rigidity is excellent. The left end of the input shaft 18' bears against the output bushing 110', which is helpful to ensure the requirement of the coaxial assembly of the input shaft 18' and the output shaft 113'.
4. The input shaft 18' is formed integrally with the eccentric wheel, the secondary eccentric wheel is formed integrally with the floating disc, so as to reduce the structural dimension and the number of components, thus the accuracy of assembly is easily assured.
5. The bearings for both ends of the input shaft 18', the primary and secondary planetary wheels, and the floating disc are all rolling bearings, thus the coefficient of friction is low, and the efficiency of transmission is high.
6. The output bushing 110', the driving bevel gear 21' and the output shaft 113' are connected through the spring pin, thus the structure is simple and easy to assembly.
7. By adopting the involute small teeth difference transmission device, direct driving of the electric motor (pneumatic motor) is achieved.

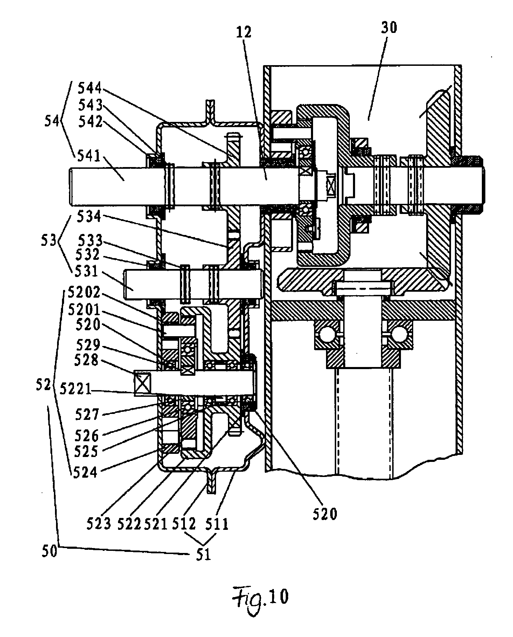

As shown in Fig. 10, the fourth embodiment of the supporting device of the present invention is an externally disposed gear box three-speed bearing device, the basic structure of which is substantially the same as that of the second embodiment, with the exception that an externally disposed gear box is additionally provided.

The externally disposed gear box 50 comprises a speed reduction gear box body 51, a small teeth difference transmission system 52, an electrical shift device 53 and a top and bottom gearshift device 54.

The speed reduction gear box body 51 is comprised of a speed reduction gear box body 511 and a speed reduction gear box cover 512 which are snapped together. The small teeth difference transmission system 52 is comprised of a bushing 521, a duplicate center wheel 522, a planetary wheel 523, a fixed disc 524, an isolating sleeve 525, a rolling bearing 526, an eccentric wheel 527, an electrical input shaft 528, a flat key 529, a rolling bearing 520, a cylindrical pin 5201 and a rolling sleeve 5202.

The electrical shift device 53 comprises a gearshift shaft 531, a bushing 532, a spring pin 533, and a change gear 534.

The top and bottom gear gearshift device 54 comprises an input shaft 541, a bushing 542, a spring pin 543, and an input shaft gear 544.

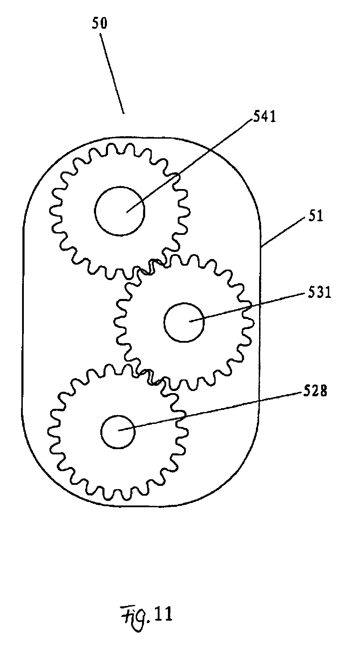

The input shaft 541, gearshift shaft 531, electrical input shaft 528 are respectively movably insertedly disposed inside the upper, middle and lower portions of the box body 51 (as shown in Fig. 11) , the input shaft 541 is of the same shaft body as the input shaft 12 on the transmission system 30. The duplicate center wheel 522 is a stepped cylindrical body. The inner hole 5221 of the small cylindrical body part constitutes the shaft hole, the outer cylindrical surface thereof being provided with an external gear ring, while the inner chamber of the big cylindrical body part constitutes an internal gear ring and the inner hole 5221 of the small cylindrical body part is movably jacketed onto the electrical input shaft 528 through the bearing. The electrical input shaft 528 is rotatably insertedly disposed in the rolling bearing 520 that is internally provided within the reduction gear box body 51. The eccentric wheel 527 is fixedly connected onto the electrical input shaft 528 by the flat key 529, the eccentric wheel 527 is externally jacketed within the rolling bearing 526, and the rolling bearing 526 is externally jacketed within the planetary wheel 523. the cylindrical pin 5201 that is insertedly connected onto the planetary wheel 523 is movably penetratingly disposed in the rolling sleeve 5202 of the fixed disc 524. The external gear ring of the planetary wheel 523 is meshed with the internal gear ring of the center wheel 522, the external gear ring of the center wheel 522 is meshed with the change gear 534 that is fixedly connected onto the gearshift shaft 531, and the change gear 534 is meshed with the input shaft gear 544 that is fixedly connected onto the input shaft 541, so as to achieve the transmission of power. The input shaft gear 544 is fixedly connected onto the input shaft 541 through the spring pin 543.

In the present embodiment, the conventional gearshift device may replace the small teeth difference transmission system, which can also achieve a certain effect provided by the present invention.

The operating principle of the present embodiment is as follows:

### 1. Electrical (or pneumatic)

With the primary speed reduction gear box, the rotation motion (electric motor or pneumatic motor) of the power equipment is transmitted to the electrical input shaft 528, causing the eccentric wheel 527 to rotate through the flat key 529, then causing the planetary wheel 523 mounted on the outer ring of the rolling bearing 526 to rotate through the rolling bearing. On the planetary wheel 523 are provided the cylindrical pin 5201 and the rolling sleeve 5202, while the rolling sleeve 5202 is in turn fitted within the corresponding hole of the fixed disc 524, and the external gear ring of the planetary wheel 523 is meshed with the internal gear ring of the duplicate center wheel 522. Thus, upon rotation of the planetary wheel 523, since the cylindrical pin 5201 and the rolling sleeve 5202 in the fixed disc 524 is not able of rotating about the center of the electrical input shaft 528 but is only capable of reciprocally translating, and there is a difference between the number of teeth of the external gear ring of the planetary wheel 523 and that of the internal gear ring of the duplicate center wheel 522 (1-4 teeth), the rotation motion of the planetary wheel 523 urges the duplicate center wheel 522 and the cylindrical gear formed integrally with the duplicate center wheel 522 to slowly rotate in the same direction. The equidirectional rotation motion is achieved through the gearshift shaft 531, the change gear 534, the input shaft gear 544, and the electrical input shaft 528.

The equidirectional rotation motion achieved by the electrical input shaft 528, via the bottom gear transmission by the built-in secondary transmission device of the upper tube 10 gives rise to the low rotational speed output at a large reduction ratio.

### 2. Manual

When using the manual gear, the shift device should be switched into the idling position, and then operated at the top or the bottom gear of the two-speed built-in bearing device as needed.

### 3. Gearshift operation

The gearshift shaft 531 of the speed reduction gear box is pulled out so that the two set of shift gears are out of the state of meshing and form the neutral position, and the top and bottom gear transmission may be carried out manually. When electrical transmission is to be performed, the gearshift shaft 531 of the speed reduction gear box is pushed in so that the two set of shift gears are in the state of meshing and put in to gear, thus electrical transmission is enabled.

Advantages of the externally disposed gear box three-speed bearing device of the present embodiment:
1. The transmission system of the supporting device is designed by applying the involute small teeth difference technique.
2. With the axial movement of the gearshift shaft 531, the cylindrical gear is caused to slide, resulting in the engagement or disengagement of the external gear ring, thus the gearshift operation is very easily achieved.
3. By adopting the involute small teeth difference transmission device, direct driving of the electric motor (pneumatic motor) is achieved.

## Claims

1. A support device for a vehicle, comprising:
an upper tube (10a)
an inner tube (20a) telescopingly coupled to the upper tube (10a) and movable between an extended position and a retracted position; and
a transmission system (30a) operably coupling the inner tube with the upper tube operable to move the inner tube between the extended and retracted positions, the transmission system comprising:
an input shaft (12a) having a central axis and movable between a first position and second position;
an output shaft (107a) that rotates at a first rate of rotation when the input shaft (12a) is in the first position and at a second rate of rotation when the input shaft is in the second position, wherein the second rate of rotation is different than the first rate of rotation; and
a gear assembly, the support device being **characterised in that** the gear assembly includes a ring gear (102a) having an axis of rotation that is substantially collocated with the central axis of the input shaft (12a), and a planetary gear (18a) having an axis of rotation that is offset from the central axis of the input shaft, wherein the planetary gear is locked for rotation with the input shaft when the input shaft is in the second position and is able to rotate independently of the input shaft when the input shaft is in the first position, and wherein the ratio of the planetary gear to the ring gear is less than 1:1.

2. The support device of claim 1, wherein the first rate of rotation is approximately 1:1.

3. The support device according to one of the preceeding claims, wherein the output shaft is keyed for rotation with the input shaft when the input shaft is in the first position.

4. The support device according to one of the preceeding claims, wherein the planetary gear is coupled to the input shaft by a cam member (101a).

5. The support device according to one of the preceeding claims, wherein the transmission system further includes:
a shell (11a) that houses the gear assembly.

6. The support device of claim 5, wherein the transmission system further includes:
a guide member fixed for rotation with the shell; and
a sliding bloc (16a) slidably engaging the guide member in a first direction, and slidably engaging the planetary gear (18a) in a second direction that is substantially perpendicular from the first direction.

7. The support device according to one of the preceeding claims, further including a screw rod (6a) operably coupled to the upper tube and the inner tube, the rotation of which moves the inner tube between the extended and retracted position, and wherein the screw rod is operably coupled to the output shaft such that rotation of the output shaft causes the screw rod to rotate.

## Patentansprüche

1. Stützvorrichtung für ein Fahrzeug, die folgendes aufweist:
ein Schaftrohr (10a);
ein Innenrohr (20a), das ineinanderschiebend mit dem Schaftrohr (10a) gekoppelt ist und zwischen einer ausgezogenen Position und einer eingezogenen Position beweglich ist; und
ein Übertragungssystem (30a), das das Innenrohr operabel mit dem Schaftrohr koppelt, das zur Bewegung des Innenrohrs zwischen der ausgezogenen und der eingezogenen Position betreibbar ist, wobei das Übertragungssystem folgendes umfasst:
eine Eingabewelle (12a) mit einer Mittelachse und zwischen einer ersten Position und einer zweiten Position beweglich;
eine Ausgabewelle (107a), die sich mit einer ersten Geschwindigkeit dreht, wenn sich die Eingabewelle (12a) in der ersten Position befindet, und sich mit einer zweiten Geschwindigkeit dreht, wenn sich die Eingabewelle in der zweiten Position befindet, wobei die zweite Rotationsgeschwindigkeit von der ersten Rotationsgeschwindigkeit verschieden ist; und
eine Getriebeanordnung, wobei die Stützvorrichtung **dadurch gekennzeichnet ist, dass** die Getriebeanordnung einen Zahnkranz (1 02a) mit einer Rotationsachse, die im Wesentlichen mit der Mittelachse der Eingabewelle (12a) zusammen angeordnet ist, und ein Planetengetriebe (18a) mit einer Rotationsachse, die von der Mittelachse der Eingabewelle verschoben ist, aufweist, wobei das Planetengetriebe zur Rotation mit der Eingabewelle verriegelt ist, wenn sich die Eingabewelle in der zweiten Position befindet, und in der Lage ist, unabhängig von der Eingabewelle zu rotieren, wenn sich die Eingabewelle in der ersten Position befindet, und wobei das Verhältnis des Planetengetriebes zu dem Zahnkranz weniger als 1:1 beträgt.

2. Stützvorrichtung nach Anspruch 1, wobei die erste Rotationsgeschwindigkeit ungefähr 1:1 beträgt.

3. Stützvorrichtung nach einem der vorhergehenden Ansprüche, wobei die Ausgabewelle zur Rotation mit der Eingabewelle ausgerichtet ist, wenn sich die Eingabewelle in der ersten Position befindet.

4. Stützvorrichtung nach einem der vorhergehenden Ansprüche, wobei das Planetengetriebe mit der Eingabewelle über ein Nockenelement (101 a) gekoppelt ist.

5. Stützvorrichtung nach einem der vorhergehenden Ansprüche, wobei das Übertragungssystem weiterhin folgendes aufweist:
eine Ummantelung (11 a), die die Getriebeanordnung einhaust.

6. Stützvorrichtung nach Anspruch 5, wobei das Übertragungssystem weiterhin folgendes aufweist:
ein Führungselement, das zur Rotation mit der Ummantelung fixiert ist; und
ein Gleitstück (16a) das gleitend in das Führungselement in einer ersten Richtung eingreift, und gleitend in das Planetengetriebe (18a) in einer zweiten Richtung, die im Wesentlichen senkrecht zu der ersten Richtung ist, eingreift.

7. Stützvorrichtung nach einem der vorhergehenden Ansprüche, die weiterhin eine Gewindestange (6a) aufweist, die mit dem Schaftrohr und dem Innenrohr operabel verknüpft ist, deren Rotation das Innenrohr zwischen einer ausgezogenen Position und einer eingezogenen Position bewegt, und wobei die Gewindestange mit der Ausgabewelle operabel verknüpft ist, derart dass die Rotation der Ausgabewelle dazu führt, dass die Gewindestange rotiert.

## Revendications

1. Dispositif de support pour un véhicule, comprenant:
un tube supérieur (10a),
un tube intérieur (20a) couplé de manière télescopique au tube supérieur (10a) et mobile entre une position en extension et une position rétractée ; et
un système de transmission (30a) qui couple de manière fonctionnelle le tube intérieur avec le tube supérieur et dont la fonction est de déplacer le tube intérieur entre la position en extension et la position rétractée, le système de transmission comprenant :
un arbre d'entrée (12a) ayant un axe central et mobile entre une première position et une seconde position ;
un arbre de sortie (107a) qui tourne à une première vitesse de rotation quand l'arbre d'entrée (12a) est dans la première position et à une seconde vitesse de rotation quand l'arbre d'entrée est dans la seconde position, la seconde vitesse de rotation étant différente de la première vitesse de rotation ; et
un ensemble à engrenages,
le dispositif de support étant **caractérisé en ce que** l'ensemble à engrenages inclut une couronne dentée (102a) ayant un axe de rotation qui est sensiblement en coïncidence avec l'axe central de l'arbre d'entrée (12a) et un engrenage planétaire (18a) ayant un axe de rotation qui est décalé de l'axe central de l'arbre d'entrée, ledit engrenage planétaire étant bloqué en vue d'une rotation avec l'arbre d'entrée quand l'arbre d'entrée est dans la seconde position, et étant capable de tourner indépendamment de l'arbre d'entrée quand l'arbre d'entrée est dans la première position, et dans lequel le rapport de l'engrenage planétaire et de la couronne dentée est inférieur à 1:1.

2. Dispositif de support selon la revendication 1, dans lequel la première vitesse de rotation est approximativement 1:1.

3. Dispositif de support selon l'une des revendications précédentes, dans lequel l'arbre de sortie est claveté en vue d'une rotation avec l'arbre d'entrée quand l'arbre d'entrée est dans la première position.

4. Dispositif de support selon l'une des revendications précédentes, dans lequel l'engrenage planétaire est couplé à l'arbre d'entrée par un élément de came (101a).

5. Dispositif de support selon l'une des revendications précédentes, dans lequel le système de transmission inclut encore :
une coque (11a) qui abrite l'ensemble à engrenages.

6. Dispositif de support selon la revendication 5, dans lequel le système de transmission inclut encore :
un élément de guidage fixé en vue d'une rotation avec la coque ; et
un bloc coulissant (16a) qui engage en coulissement l'élément de guidage dans une première direction, et qui engage en coulissement l'engrenage planétaire (18a) dans une seconde direction qui est sensiblement perpendiculaire à la première direction.

7. Dispositif de support selon l'une des revendications précédentes, incluant encore une tige filetée (6a) fonctionnellement couplée au tube supérieur et au tube intérieur, dont la rotation déplace le tube intérieur entre la position en extension et la position rétractée, et dans lequel la tige filetée est fonctionnellement couplée à l'arbre de sortie de telle façon qu'une rotation de l'arbre de sortie amène la tige filetée en rotation.
